# FASCICULE DE BREVET EUROPEEN

(11) **EP 3 600 917 B1**
(45) Date de publication et mention de la délivrance du brevet: **05.05.2021**
(21) Numéro de dépôt: 18715777.1
(22) Date de dépôt: 21.03.2018
(51) Int. Cl.: B60C 9/20, B60C 11/03, B60C 11/00, B60C 9/22

(54) **PNEUMATIQUE POUR VÉHICULE DE TOURISME**
REIFEN FÜR PERSONENKRAFTWAGEN
TYRE FOR PASSENGER VEHICLE

(30) Priorité: 23.03.2017 FR 1752386
(43) Date de publication de la demande: 05.02.2020
(73) Titulaire: COMPAGNIE GENERALE DES ETABLISSEMENTS MICHELIN, 63000 Clermont-Ferrand (FR)
(72) Inventeur: MUHLHOFF, Olivier, 63040 Clermont-Ferrand Cedex 9 (FR); FRAYSSE, Patrice, 63040 Clermont-Ferrand Cedex 9 (FR); FERNANDEZ, Miguel, 63040 Clermont-Ferrand Cedex 9 (FR); LABRUNIE, Philippe, 63040 Clermont-Ferrand Cedex 9 (FR)
(74) Mandataire: Desbordes, Guillaume
(86) Numéro de dépôt international: PCT/FR2018/050680
(87) Numéro de publication internationale: WO 2018/172695

(56) Documents cités:
- EP-A1- 0 043 563
- EP-A1- 2 781 372
- EP-A1- 2 962 874
- DE-T5-112012 005 462
- US-A1- 2010 012 241
- US-A1- 2013 269 845

## Description

L'invention a pour objet un pneumatique radial destiné à équiper un véhicule de tourisme, appelé usuellement pneumatique de tourisme.

Le domaine de pneumatique plus particulièrement concerné est celui des pneumatiques de tourisme dont la section méridienne est caractérisée par une largeur de section S et une hauteur de section H, au sens de la norme de la European Tyre and Rim Technical Organisation ou « ETRTO », telles que le rapport H/S, exprimé en pourcentage, est au plus égal 55, et la largeur de section S est au moins égale à 205 mm. En outre le diamètre au seat D, définissant le diamètre de la jante de montage du pneumatique, est au moins égal à 17 pouces, et généralement au plus égal à 21 pouces. A titre d'exemple, un pneumatique de dimension 225/40R18 appartient à cette catégorie de pneumatiques.

Dans ce qui suit, et par convention, les directions circonférentielle XX', axiale YY' et radiale ZZ' désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur », respectivement « radialement extérieur», on entend «plus proche de l'axe de rotation du pneumatique », respectivement « plus éloigné de l'axe de rotation du pneumatique». Par «axialement intérieur », respectivement « axialement extérieur», on entend «plus proche du plan équatorial du pneumatique», respectivement « plus éloigné du plan équatorial du pneumatique», le plan équatorial XZ du pneumatique étant le plan passant par le milieu de la surface de roulement du pneumatique et perpendiculaire à l'axe de rotation du pneumatique.

De façon générale, un pneumatique comprend une bande de roulement, destinée à entrer en contact avec le sol par l'intermédiaire d'une surface de roulement, et reliée par l'intermédiaire de deux flancs à deux bourrelets, assurant la liaison mécanique entre le pneumatique et la jante sur laquelle il est monté. Un pneumatique radial comprend une armature de renforcement, comprenant une armature de sommet, radialement intérieure à la bande de roulement, et une armature de carcasse, généralement radialement intérieure à l'armature de sommet.

La bande de roulement comprend des éléments en relief séparés les uns des autres par des creux. L'agencement des éléments en relief et des creux constitue la sculpture de la bande de roulement. Les éléments en relief s'étendent radialement vers l'extérieur à partir d'une surface de fond jusqu'à la surface de roulement. Pour un pneumatique à l'état neuf, la distance radiale entre la surface de fond et la surface de roulement, mesurée dans le plan équatorial du pneumatique, est appelée hauteur de sculpture H_{S}. La proportion de creux par rapport aux éléments en relief est définie par un taux d'entaillement volumique T_{EV}, égal au rapport entre le volume total des creux et la somme des volumes totaux respectifs des creux et des éléments en relief. Les mesures de volumes sont réalisées par des relevés de profil de la bande de roulement du pneumatique neuf, par exemple, par laser. A titre d'exemple, la bande de roulement d'un pneumatique de tourisme de l'état de la technique, à l'état neuf, a une hauteur de sculpture H_{S} au moins égale à 7.5 mm et au plus égale à 8 mm et un taux d'entaillement volumique T_{EV} au moins égal à 30% et au plus égal à 32%.

La bande de roulement comprend au moins un matériau polymérique de type mélange élastomérique, c'est-à-dire un matériau polymérique obtenu par mélangeage d'au moins un élastomère, d'au moins une charge renforçante et d'un système de réticulation. Le plus souvent, la bande de roulement est constituée par un mélange élastomérique unique.

Une caractéristique physique usuelle d'un mélange élastomérique est sa température de transition vitreuse Tg, température à laquelle le mélange élastomérique passe d'un état caoutchouteux déformable à un état vitreux rigide. La température de transition vitreuse T_{g} d'un mélange élastomérique est généralement déterminée lors de la mesure des propriétés dynamiques du mélange élastomérique, sur un viscoanalyseur (Metravib VA4000), selon la norme ASTM D 5992-96. La mesure des propriétés dynamiques est réalisée sur un échantillon de mélange élastomérique vulcanisé, c'est dire cuit jusqu'à un taux de conversion d'au moins 90%, l'échantillon ayant la forme d'une éprouvette cylindrique ayant une épaisseur égale à 2 mm et une section égale à 78,5 mm². On enregistre la réponse de l'échantillon de mélange élastomérique à une sollicitation sinusoïdale en cisaillement simple alterné, ayant une amplitude crête-crête égale à 0,7 MPa et une fréquence égale à 10 Hz. On effectue un balayage en température à vitesse de montée en température constante de +1.5°C/min. Les résultats exploités sont généralement le module complexe de cisaillement dynamique G*, comprenant une partie élastique G' et une partie visqueuse G", et la perte dynamique tgδ, égale au rapport G"/G'. La température de transition vitreuse T_{g} est la température à laquelle la perte dynamique tgδ atteint un maximum lors du balayage en température.

Le comportement mécanique d'un mélange élastomérique peut être caractérisé, d'une part, par sa dureté Shore A, mesurée conformément aux normes DIN 53505 ou ASTM 2240, et, d'autre part, par sa perte à 60°C, qui est une perte d'énergie à 60 °C par rebond à énergie imposée mesurée au sixième choc et dont la valeur, exprimée en %, est la différence entre l'énergie fournie et l'énergie restituée, rapportée à l'énergie fournie.

A titre d'exemple, la matériau constitutif de la bande de roulement d'un pneumatique de tourisme de l'état de la technique pris en référence est un mélange élastomérique ayant une température de transition vitreuse T_{g} au moins égale à -5°C et au plus égale à -1°C, une dureté Shore A au moins égale à 73 et au plus égale à 75, et une perte à 60°C en moyenne égale à 35% et au plus égale à 38%.

L'armature de sommet, radialement intérieure à la bande de roulement et radialement extérieure à l'armature de carcasse, comprend, radialement de l'extérieur vers l'intérieur, une armature de frettage comprenant au moins une couche de frettage et une armature de travail comprenant au moins une couche de travail.

L'armature de sommet a pour fonction de reprendre à la fois les sollicitations mécaniques de gonflage, générées par la pression de gonflage du pneumatique et transmises par l'armature de carcasse, et les sollicitations mécaniques de roulage, générées par le roulage du pneumatique sur un sol et transmises par la bande roulement. L'armature de travail a pour fonction spécifique de conférer au pneumatique de la rigidité selon les directions circonférentielle, axiale et radiale et, en particulier, de la tenue de route. L'armature de frettage a pour fonction spécifique d'apporter une rigidité circonférentielle supplémentaire par rapport à l'armature de travail, pour limiter les déformations radiales du pneumatique.

L'armature de frettage, pour un pneumatique de tourisme, comprend le plus souvent une seule couche de frettage. Une couche de frettage comprend des renforts généralement en textile, par exemple en polyamide aliphatique tel que le nylon, enrobés dans un mélange élastomérique et parallèles entre eux. Les renforts forment, avec la direction circonférentielle XX' du pneumatique, un angle A_{F}, mesuré dans le plan équatorial XZ du pneumatique, au plus égal à 5°, voire au plus égal à 1°, en valeur absolue.

L'armature de travail, pour un pneumatique de tourisme, comprend usuellement deux couches de travail, radialement superposées, comprenant des renforts métalliques enrobés dans un mélange élastomérique, parallèles entre eux dans chaque couche et croisés d'une couche à la suivante, en formant, avec la direction circonférentielle XX' du pneumatique, des angles (A_{T1}, A_{T2}), mesurés dans le plan équatorial XZ du pneumatique, dont la valeur absolue est généralement au moins égale à 20° et au plus égale à 25°. L'armature de travail a une largeur axiale L_{T}, définie comme la largeur axiale maximale des couches de travail, au moins égale à la largeur axiale L_{F} de l'armature de frettage, définie le plus souvent comme la largeur axiale de l'unique couche de frettage.

Les renforts métalliques des couches de travail sont des câbles constitués par un assemblage de fils métalliques, généralement en acier et, plus précisément, en acier au carbone. A titre d'exemple, les renforts métalliques utilisés pour le pneumatique de tourisme de l'état de la technique, pris en référence, est un câble (2+2).26, constitué par un assemblage torsadé de deux paires de deux fils métalliques ayant chacun un diamètre égal à 0.26 mm.

De façon générale, un renfort métallique est caractérisé mécaniquement par une courbe représentant la force de traction (en N), appliquée au renfort métallique, en fonction de l'allongement relatif (en %) du renfort métallique, dite courbe force-allongement. De cette courbe force-allongement sont déduites des caractéristiques mécaniques en traction, telles que l'allongement structural Aₛ (en %), l'allongement total à la rupture Aₜ (en %), la force à la rupture Fₘ (charge maximale en N) et la résistance à la rupture Rₘ (en MPa), ces caractéristiques étant mesurées selon la norme ISO 6892 de 1984.

L'allongement total à la rupture Aₜ du renfort métallique est, par définition, la somme de ses allongements structural, élastique et plastique (Aₜ = Aₛ + Aₑ + Aₚ). L'allongement structural Aₛ résulte du positionnement relatif des fils métalliques constitutifs du renfort métallique sous un faible effort de traction. L'allongement élastique Aₑ résulte de l'élasticité même du métal des fils métalliques, constituant le renfort métallique, pris individuellement (loi de Hooke). L'allongement plastique Aₚ résulte de la plasticité (déformation irréversible au-delà de la limite d'élasticité) du métal de ces fils métalliques pris individuellement. Ces différents allongements ainsi que leurs significations respectives, bien connus de l'homme du métier, sont décrits, par exemple, dans les documents US 5843583, WO 2005014925 et WO 2007090603.

On définit également, en tout point de la courbe force-allongement, un module en extension (en GPa) qui représente la pente de la droite tangente à la courbe force-allongement en ce point. En particulier, on appelle module élastique en extension ou module d'Young, le module en extension de la partie linéaire élastique de la courbe force-allongement.

Les renforts métalliques des couches de travail sont le plus souvent non élastiques, c'est-à-dire caractérisés par un allongement relatif, sous une force de traction égale 10% de la force à rupture Fₘ, au plus égal à 0.2% et un module élastique en extension compris usuellement entre 150 GPa et 200 GPa.

Radialement à l'intérieur de l'armature de sommet, l'armature de carcasse comprend généralement au moins une couche de carcasse comprenant des renforts le plus souvent en matériau textile, enrobés dans un matériau élastomérique et parallèles entre eux. Les renforts d'une couche de carcasse forment, avec la direction circonférentielle XX' du pneumatique, un angle A_{C} au moins égal à 85° et au plus égal 95°. Un matériau textile couramment utilisé pour les renforts d'une couche de carcasse, pour un pneumatique de tourisme de l'état de la technique, est un polyester tel qu'un polyéthylène téréphtalate (PET).

Une couche de carcasse peut être retournée ou non retournée. Une couche de carcasse est dite retournée, lorsqu'elle comprend une partie principale, reliant les deux bourrelets du pneumatique entre eux, et s'enroule, dans chaque bourrelet, de l'intérieur vers l'extérieur du pneumatique autour d'un élément de renforcement circonférentiel ou tringle, pour former un retournement ayant une extrémité libre. Une couche de carcasse est non retournée, lorsqu'elle est constituée uniquement d'une partie principale, reliant les deux bourrelets entre eux, sans s'enrouler autour d'une tringle.

Les principales performances visées pour un pneumatique de tourisme sont les adhérences longitudinale et transversale sur sol mouillé et sur sol sec, le comportement, en particulier à faible accélération transversale, et l'usure.

En outre, la recherche d'une masse de pneumatique la plus faible possible est une préoccupation constante du concepteur de pneumatique, afin de réduire le coût de fabrication du pneumatique, sans toutefois dégrader son endurance.

Des pneumatiques sont connus des documents DE112012005462, EP0043563, EP2781372, US2013269845, US2010012241 et EP2962874 de l'état de la technique.

Les inventeurs se sont données pour objectif d'améliorer encore, par rapport à un pneumatique de tourisme de l'état de la technique tel que précédemment décrit, les adhérences longitudinale et transversale sur sol mouillé et sur sol sec, tout en maintenant les niveaux de performances en comportement, en particulier à faible accélération transversale, et en usure, et tout en diminuant la masse sans dégradation de l'endurance.

Ce but a été atteint, selon l'invention, par un pneumatique pour véhicule de tourisme comprenant :
- une bande de roulement, destinée à entrer en contact avec un sol par l'intermédiaire d'une surface de roulement et comprenant des éléments en relief s'étendant radialement vers l'extérieur à partir d'une surface de fond jusqu'à la surface de roulement sur une hauteur radiale H_{S} mesurée dans un plan équatorial XZ du pneumatique, les éléments en relief ayant un volume total Vp et étant séparés par des creux ayant un volume total V_{C}, la bande de roulement ayant un taux d'entaillement volumique T_{EV}, défini comme le rapport entre le volume total V_{C} des creux et la somme du volume total V_{C} des creux et du volume total Vp des éléments en relief, la bande de roulement comprenant en outre au moins un mélange élastomérique ayant une température de transition vitreuse T_{g}, une dureté Shore A et une perte à 60°C,
- une armature de frettage, radialement intérieure à la bande de roulement, comprenant au moins une couche de frettage comprenant des renforts textiles enrobés dans un mélange élastomérique, parallèles entre eux et formant, avec une direction circonférentielle XX' du pneumatique, un angle A_{F}, mesuré dans le plan équatorial XZ du pneumatique, au plus égal à 5° en valeur absolue,
- une armature de travail, radialement intérieure à l'armature de frettage, comprenant au moins deux couches de travail, radialement superposées, comprenant des renforts métalliques enrobés dans un mélange élastomérique, parallèles entre eux dans chaque couche et croisés d'une couche à la suivante, en formant, avec la direction circonférentielle XX' du pneumatique, un angle (A_{T1}, A_{T2}), mesuré dans le plan équatorial XZ du pneumatique, dont la valeur absolue est au moins égale à 20°,
- une armature de carcasse comprenant au moins une couche de carcasse comprenant des renforts textiles enrobés dans un matériau élastomérique, parallèles entre eux et formant, avec la direction circonférentielle XX' du pneumatique, un angle A_{C} au moins égal à 85° et au plus égal 95°,
- la bande de roulement ayant un taux d'entaillement volumique T_{EV} au moins égal à 20% et au plus égal à 29% et une hauteur radiale H_{S} des éléments en relief au moins égale à 6.0 mm et au plus égale à 7.6 mm,
- le au moins un mélange élastomérique constitutif de la bande de roulement ayant une température de transition vitreuse T_{g} au moins égale à -18°C et au plus égale à -6°C, une dureté Shore A au moins égale à 60 et au plus égale à 75 et une perte à 60°C au moins égale à 24% et au plus égale à 35%,
- les renforts textiles de la au moins une couche de frettage de l'armature de frettage comprenant un polyamide aromatique, tel que l'aramide,
- les renforts métalliques de chacune des au moins deux couches de travail de l'armature de travail formant, avec la direction circonférentielle XX' du pneumatique, un angle (A_{T1}, A_{T2}), mesuré dans le plan équatorial XZ du pneumatique, dont la valeur absolue est au moins égale à 25° et au plus égale à 40°,
- les renforts métalliques de chacune des au moins deux couches de travail de l'armature de travail étant des monofilaments en acier ayant une section S inscrite dans un cercle de diamètre D et dont la plus petite dimension Dmin est au moins égale à 0.20 mm et au plus égale à 0.5 mm,
- les renforts métalliques de chacune des au moins deux couches de travail de l'armature de travail étant répartis selon une densité d_{T} au moins égale à 100 fils/dm et au plus égale à 200 fils /dm,
- et chaque couche de travail de l'armature de travail ayant une épaisseur radiale moyenne E_{T} au moins égale à D+0.1 mm et au plus égale à D+0.6 mm, avec D diamètre du cercle circonscrit à la section S du renfort métallique de type monofilament.

La bande de roulement selon l'invention a un taux d'entaillement volumique T_{EV} au moins égal à 20% et au plus égal à 29% et une hauteur radiale H_{S} des éléments en relief au moins égale à 6.0 mm et au plus égale à 7.6 mm, alors que la bande de roulement de l'état de la technique de référence a un taux d'entaillement volumique T_{EV} au moins égal à 30% et au plus égal à 32% et une hauteur de sculpture H_{S} au moins égale à 7.5 mm et au plus égale à 8 mm. Par conséquent, le taux d'entaillement volumique T_{EV} et la hauteur radiale H_{S} des éléments en relief de la bande de roulement selon l'invention ont des valeurs inférieures aux caractéristiques correspondantes de la bande de roulement de l'état de la technique pris en référence. Sachant que le volume total Vp des éléments en relief de la bande de roulement, qui caractérise le volume de matière à user, décroît avec le taux d'entaillement T_{EV} et croît avec la hauteur radiale H_{S}, le volume total Vp des éléments en relief de la bande de roulement respectivement selon l'invention et selon l'état de la technique sont sensiblement du même niveau. Par conséquent, l'impact du volume de gomme à user sur la performance en usure est proche entre le pneumatique de l'invention et celui de l'état de la technique.

Le mélange élastomérique de la bande de roulement selon l'invention a une température de transition vitreuse T_{g} au moins égale à -18°C et au plus égale à -6°C, une dureté Shore A au moins égale à 60 et au plus égale à 75 et une perte à 60°C au moins égale à 24% et au plus égale à 35%, alors que le mélange élastomérique de la bande de roulement de l'état de la technique pris en référence a une température de transition vitreuse T_{g} au moins égale à -5°C et au plus égale à -1°C, une dureté Shore A au moins égale à 73 et au plus égale à 75, et une perte à 60°C en moyenne égale à 35% et au plus égale à 38%. Par conséquent, la température de transition vitreuse T_{g}, la dureté Shore A et la perte à 60°C du mélange élastomérique de la bande de roulement selon l'invention ont des valeurs pouvant être inférieures aux caractéristiques correspondantes du mélange élastomérique de la bande de roulement de l'état de la technique pris en référence : ce qui permet globalement un gain en adhérence, mais aussi en résistance roulement.

Du point de vue de sa composition chimique, le mélange élastomérique de la bande de roulement selon l'invention comprend 100 pce (parties pour cent d'élastomère) d'élastomère diénique. Par définition, un élastomère diénique est un homopolymère ou un copolymère, issu au moins en partie de monomères diènes, c'est-à-dire de monomères porteurs de deux doubles liaisons carbone-carbone conjuguées ou non. Préférentiellement le mélange élastomérique comprend un copolymère de 1,3-butadiène et de styrène (SBR) fonctionnalisé à un taux au moins égal à 20 pce. Plus préférentiellement le copolymère de 1,3-butadiène et de styrène (SBR) fonctionnalisé comprend une fonction silanol.

Egalement du point de vue de sa composition chimique, le mélange élastomérique de la bande de roulement selon l'invention comprend une résine plastifiante de type résine thermoplastique à un taux au moins égal à 20 pce.

Par ailleurs, une couche de frettage de l'armature de frettage comprenant des renforts textiles comprenant un polyamide aromatique, tel que l'aramide, et non des renforts textiles constitués par un polyamide aliphatique, tel que le nylon, comme dans l'état de la technique de référence, confère une plus grande rigidité circonférentielle au sommet du pneumatique, ce qui est également favorable à l'adhérence, en particulier sur sol sec. Une telle caractéristique est également avantageuse vis-à-vis de la résistance à l'usure et du comportement, en raison d'une rigidité de dérive plus élevée.

Encore selon l'invention, les renforts métalliques de chacune des au moins deux couches de travail de l'armature de travail formant, avec la direction circonférentielle XX' du pneumatique, un angle (A_{T1}, A_{T2}), mesuré dans le plan équatorial XZ du pneumatique, dont la valeur absolue est au moins égale à 25° et au plus égale à 40°. Dans le pneumatique de l'état de la technique, l'angle (A_{T1}, A_{T2}) a une valeur absolue généralement au moins égale à 20° et au plus égale à 25°, donc inférieure à celui de l'invention. Par conséquent, la rigidité de dérive du pneumatique selon l'invention est supérieure à celle du pneumatique de l'état de la technique, ce qui confère au pneumatique selon l'invention un avantage en adhérence sur sol mouillé, mais aussi en résistance à l'usure et en bruit.

De plus les renforts métalliques de chacune des au moins deux couches de travail de l'armature de travail sont des monofilaments en acier, ayant une section S inscrite dans un cercle de diamètre D et dont la plus petite dimension Dmin est au moins égale à 0.20 mm et au plus égale à 0.5 mm.

Les monofilaments sont, par définition, des fils métalliques unitaires. Les monofilaments peuvent avoir toute forme de section, préférentiellement circulaire voire oblongue. Pour un monofilament ayant une section circulaire S de diamètre D, la plus grande dimension Dmax de la section circulaire S correspond au diamètre D. Une section oblongue est avantageuse par rapport une section circulaire de même plus petite dimension Dmin, car elle a une inertie de flexion plus élevée, ce qui confère au monofilament une meilleure résistance au flambement.

Les monofilaments peuvent être rectilignes ou non. Ils peuvent être préformés, de forme sinusoïdale, zigzag, ondulée ou suivant une spirale.

Les monofilaments sont en acier, de préférence en acier au carbone tel que ceux utilisés dans les câbles de type "steel cords" ; mais il est bien entendu possible d'utiliser d'autres aciers, par exemple des aciers inoxydables, ou d'autres alliages. Lorsqu'un acier au carbone est utilisé, sa teneur en carbone (% en poids d'acier) est de préférence comprise dans un domaine de 0,8% à 1,2%. L'invention s'applique en particulier à des aciers du type « steel cord » à très haute résistance « SHT » (« Super High Tensile »), ultra-haute résistance « UHT » (« Ultra High Tensile ») ou « MT » (« Mega Tensile »). Les renforts en acier au carbone ont alors une résistance à la rupture en traction Rm qui est de préférence supérieure à 3000 MPa, plus préférentiellement supérieure à 3500 MPa. Leur allongement total à la rupture At est de préférence supérieur à 2,0%.

L'acier utilisé, qu'il s'agisse en particulier d'un acier au carbone ou d'un acier inoxydable, peut être lui-même revêtu d'une couche métallique améliorant par exemple les propriétés de mise en œuvre du monofilament d'acier, ou les propriétés d'usage du renfort et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc ; on rappelle que, lors du procédé de fabrication des fils, le revêtement de laiton ou de zinc facilite le tréfilage du fil, ainsi que le collage du fil avec le caoutchouc. Mais les renforts pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

Par ailleurs les renforts métalliques de chacune des au moins deux couches de travail de l'armature de travail sont répartis selon une densité d_{T} au moins égale à 100 fils/dm et au plus égale à 200 fils /dm.

Par densité, on entend le nombre moyen de monofilaments sur une largeur de couche de travail de 10 cm, cette largeur étant prise perpendiculairement à la direction des monofilaments de la couche de travail considérée. La distance entre deux monofilaments consécutifs ou pas peut être fixe ou variable. La pose des monofilaments en fabrication peut être effectuée par couche, par bandelette ou de façon unitaire. Une densité de monofilaments de chaque couche de travail au moins égale à 100 fils par dm et au plus égale à 200 fils par dm garantit une résistance à rupture en fatigue des monofilaments satisfaisante et une bonne tenue au cisaillement des mélanges élastomériques situés entre les filaments.

En outre la résistance au flambement d'un monofilament dépend également de la résistance des monofilaments axialement adjacents, un début de flambement pouvant en entraîner un autre par l'effet d'une répartition de la charge autour du monofilament qui flambe. Pour obtenir une performance en endurance améliorée, il peut être avantageux non seulement d'observer des conditions de diamètre de section et de densité des monofilaments, mais aussi de remplir une condition portant sur la résistance à rupture R_{C} définie par Rc= Rm*S*d_{T}, où Rm est la résistance à la rupture en traction des monofilaments en MPa, S la section des monofilaments en mm² et d_{T} la densité de monofilaments de la couche de travail considérée, en nombre de monofilaments par dm. Avantageusement la résistance à rupture R_{C} de chaque couche de travail doit être au moins égale à 30 000 N/dm.

Les renforts métalliques selon l'invention étant des monofilaments, chaque couche de travail de l'armature de travail a une épaisseur radiale moyenne E_{T} au moins égale à D+0.1 mm et au plus égale à D+0.6 mm, avec D diamètre du cercle circonscrit à la section S du renfort métallique de type monofilament. Un monofilament étant intercalé entre une épaisseur de mélange élastomérique radialement intérieure et une épaisseur de mélange élastomérique radialement extérieure, ces deux épaisseurs étant le plus souvent sensiblement égales, l'épaisseur radiale moyenne E_{T} de la couche de travail est égale à la somme du diamètre D et des deux épaisseurs de mélange élastomérique respectivement radialement intérieure et radialement extérieure. Par conséquent, dans le cas d'une répartition sensiblement symétrique du mélange élastomérique respectivement radialement à l'intérieur et radialement à l'extérieur des monofilaments, l'intervalle d'épaisseur radiale moyenne E_{T} de la couche de travail spécifié implique que chaque épaisseur de mélange élastomérique respectivement radialement intérieure et radialement extérieure est au moins égale à 0.05 mm et au plus égale à 0.3 mm. Cette épaisseur est sensiblement inférieure à celle obtenue à des renforts métalliques de type câbles, constitués d'un assemblage de plusieurs fils unitaires, d'où un gain en masse sur les couches de travail et donc sur le pneumatique.

Ainsi la combinaison des caractéristiques essentielles de l'invention permet d'améliorer, par rapport à un pneumatique de tourisme de l'état de la technique tel que précédemment décrit, les adhérences longitudinale et transversale sur sol mouillé et sur sol sec, tout en maintenant les niveaux de performances en comportement, en particulier à faible accélération transversale, et en usure. Elle permet également avantageusement une diminution de la résistance au roulement du pneumatique, et donc de la consommation en carburant du pneumatique, et une réduction du bruit généré par le pneumatique. Elle permet enfin une diminution de la masse du pneumatique.

La bande de roulement a de préférence une hauteur radiale H_{S} des éléments en relief au moins égale à 6.5 mm, ce qui permet d'augmenter encore le volume total Vp des éléments en relief de la bande de roulement, donc le volume de matière à user, et, par conséquent, d'améliorer la performance en usure.

Les renforts textiles de la au moins une couche de frettage de l'armature de frettage forment préférentiellement, avec la direction circonférentielle XX' du pneumatique, un angle A_{F}, mesuré dans le plan équatorial XZ du pneumatique, au plus égal à 1° en valeur absolue. Cette condition implique que les renforts textiles sont sensiblement circonférentiels et maximisent les effets du frettage.

Encore préférentiellement, l'armature de frettage ayant une largeur axiale L_{F} et l'armature de travail ayant une largeur axiale L_{T}, la largeur axiale L_{F} de l'armature de frettage est au moins égale à la largeur axiale L_{T} de l'armature de travail, de telle sorte que l'armature de frettage est entièrement recouvrante voire débordante par rapport à l'armature de travail. Une armature de frettage au moins aussi large que l'armature de travail a un effet optimum vis-à-vis du frettage.

Selon un premier mode de réalisation de l'armature de frettage, les renforts textiles de la au moins une couche de frettage de l'armature de frettage comprennent une combinaison d'un polyamide aromatique, tel que l'aramide, et d'un polyamide aliphatique, tel que le nylon. De tels renforts sont également appelés renforts hybrides et présentent l'avantage d'avoir un comportement mécanique en extension dit « bi-module », caractérisé par un bas module d'extension, celui du nylon, et donc une grande déformabilité, pour de petits allongements, et un module d'extension élevé et donc une plus faible déformabilité, pour de grands allongements.

Selon un deuxième mode de réalisation de l'armature de frettage, les renforts textiles de la au moins une couche de frettage de l'armature de frettage comprennent une combinaison d'un polyamide aromatique, tel que l'aramide, et d'un polyester, tel que le polyéthylène téréphtalate (PET). De tels renforts sont également des renforts hybrides qui présentent les mêmes avantages que ceux décrits précédemment.

Les renforts métalliques de chacune des au moins deux couches de travail de l'armature de travail forment préférentiellement, avec la direction circonférentielle XX' du pneumatique, un angle (A_{T1}, A_{T2}), mesuré dans le plan équatorial XZ du pneumatique, dont la valeur absolue est au moins égale à 27° et au plus égale à 33°. Comme décrit précédemment, un tel intervalle d'angle confère au pneumatique une rigidité de dérive garantissant une performance satisfaisante en adhérence sur sol mouillé, mais aussi en résistance à l'usure et en bruit.

Selon un mode de réalisation préféré des renforts métalliques de couche de travail, les renforts métalliques de chacune des au moins deux couches de travail de l'armature de travail sont des monofilaments ayant une section S dont la plus petite dimension Dmin est au moins égale à 0.30 mm et au plus égale à 0.4 mm, de préférence au moins égale à 0.32 mm et au plus égale à 0.36 mm. Cet intervalle de valeurs conduit à un compromis optimal entre le gain de masse et la tenue au flambement des monofilaments des couches de travail.

Selon une variante du mode de réalisation préféré des renforts métalliques de couche de travail, les renforts métalliques de chacune des au moins deux couches de travail de l'armature de travail sont des monofilaments en acier dont la résistance à la rupture en traction Rm est au moins égale à 3000 MPA, de préférence au moins égale à 3500 MPa. Ces valeurs minimales de résistance à la rupture en traction Rm correspondent à des monofilaments en acier au carbone avec une teneur en carbone comprise entre 0,8% et 1,2% (% en poids d'acier).

Préférentiellement les renforts métalliques de chacune des au moins deux couches de travail de l'armature de travail sont répartis selon une densité d_{T} au moins égale à 120 fils/dm et au plus égale à 180 fils /dm. Cet intervalle de valeurs de densité garantit une endurance améliorée du mélange élastomérique, intercalé entre les monofilaments et soumis à un cisaillement, et l'endurance mécanique des monofilaments en traction et compression.

Selon un mode de réalisation préféré de chaque couche de travail, chaque couche de travail de l'armature de travail a une épaisseur radiale moyenne E_{T} au moins égale à D+0.3 mm et au plus égale à D+0.5 mm, avec D diamètre du cercle circonscrit à la section S du renfort métallique de type monofilament. Par conséquent, dans le cas d'une répartition sensiblement symétrique du mélange élastomérique respectivement radialement à l'intérieur et radialement à l'extérieur des monofilaments, l'intervalle d'épaisseur radiale moyenne E_{T} de la couche de travail spécifié implique que chaque épaisseur de mélange élastomérique respectivement radialement intérieure et radialement extérieure au droit d'un monofilament est au moins égale à 0.15 mm et au plus égale à 0.25 mm.

Avantageusement une couche intermédiaire comprenant au moins un mélange élastomérique est positionnée radialement à l'intérieur de la bande de roulement et radialement à l'extérieur de l'armature de frettage. Le pneumatique de l'état de la technique de référence ne comprend pas une telle couche intermédiaire qui permet d'optimiser en particulier la résistance au roulement.

Egalement avantageusement la couche intermédiaire a une épaisseur radiale E au moins égale à 0.3 mm et au plus égale à 4.0 mm. Une telle épaisseur garantit un gain en résistance au roulement par rapport à l'état de la technique, c'est-à-dire une diminution de la résistance au roulement.

Encore avantageusement, le au moins un mélange élastomérique, constitutif de la couche intermédiaire ayant une dureté Shore A et une perte à 60°C, le au moins un mélange élastomérique, constitutif de la couche intermédiaire, a une dureté Shore A au moins égale à 63 et au plus égale à 69 et une perte à 60°C au moins égale à égale à 10% et au plus égale à 16%. Ces caractéristiques ont des valeurs inférieures à celles du mélange élastomérique de la bande de roulement et permettent donc de diminuer encore la résistance au roulement.

Selon une variante de réalisation de la couche intermédiaire, la couche intermédiaire est dissymétrique par rapport au plan équatorial XZ du pneumatique, de telle sorte que la surface S₁ de la section méridienne de la portion de couche intermédiaire, axialement positionnée dans la moitié de pneumatique destinée à être montée du côté intérieur du véhicule, est au moins égale à 1,05 fois et au plus égale à 1,15 fois la surface S₂ de la section méridienne de la portion de couche intermédiaire, axialement positionnée dans la moitié de pneumatique destinée à être montée du côté extérieur du véhicule. Ceci implique que le volume de la portion de couche intermédiaire est plus élevé pour la moitié de pneumatique positionnée côté intérieur du véhicule que pour la moitié de pneumatique positionnée côté extérieur du véhicule. Ceci permet d'améliorer l'endurance du sommet du pneumatique, en roulage sur circuit, tout en conservant le même niveau de résistance au roulement.

Selon une première variante de réalisation de la sculpture, l'agencement des éléments en relief de la bande de roulement est dissymétrique par rapport au plan équatorial XZ du pneumatique, de telle sorte que le taux d'entaillement volumique T_{EV1} de la moitié de bande roulement destinée à être montée du côté intérieur du véhicule est au moins égal à 1.3 fois et au plus égal à 2 fois le taux d'entaillement volumique T_{EV2} de la moitié de bande roulement destinée à être montée du côté extérieur du véhicule. De préférence, le taux d'entaillement volumique T_{EV1} de la moitié de bande roulement destinée à être montée du côté intérieur du véhicule est au moins égal à 1.5 fois et au plus égal à 1.8 fois le taux d'entaillement volumique T_{EV2} de la moitié de bande roulement destinée à être montée du côté extérieur du véhicule. Un agencement dissymétrique des éléments en relief de la bande de roulement permet d'améliorer l'adhérence transversale sur sol sec, ainsi que les formes d'usure associées, sans dégrader l'adhérence transversale sur sol mouillé grâce à un taux d'entaillement volumique global du même niveau que celui de la bande de roulement du pneumatique de l'état de la technique pris en référence.

Selon une deuxième variante de réalisation de la sculpture, les éléments en relief de la bande de roulement comprenant chacun une face radialement extérieure, positionnée sur la surface de roulement, appelée face de contact, la face de contact de tout élément en relief de la bande de roulement comprend au moins un chanfrein ayant une hauteur radiale H_{CH} au moins égale à 1 mm et au plus égale à 2 mm et formant, avec la surface de roulement, un angle A_{CH} au moins égale à 45°. La hauteur radiale H_{CH} et l'angle A_{CH} sont de préférence variables le long de la face de contact. La présence de chanfreins sur la face de contact des éléments en relief entraîne une baisse de la pression locale de contact au niveau de l'arête d'attaque, ce qui contribue à améliorer encore l'adhérence sur sol sec et également à retarder l'apparition des formes d'usure en usage agressif.

Selon un mode de réalisation particulier, les renforts métalliques de chacune des au moins deux couches de travail de l'armature de travail sont constitués par des mono-filaments, qui sont plus légers et présentent une meilleure tenue en compression que les assemblages usuels de fils métalliques. Un mono-filament est constitué par un fil métallique unique.

L'armature de carcasse comprenant généralement au moins une couche de carcasse comprenant des renforts le plus souvent en matériau textile, enrobés dans un matériau élastomérique et parallèles entre eux, elle comprend de préférence soit une couche de carcasse unique soit deux couches de carcasse. Encore préférentiellement, les renforts textiles de couche de carcasse sont en polyéthylène téréphtalate (PET).

Selon un mode de réalisation particulier, l'armature de renforcement du pneumatique a une architecture de type « shoulder lock », caractérisée par une armature de carcasse comprenant une couche de carcasse dite retournée, c'est-à-dire s'enroulant dans chaque bourrelet du pneumatique autour d'un élément de renforcement circonférentiel ou tringle pour former un retournement dont l'extrémité libre vient en contact avec la face radialement intérieure de l'armature de sommet.

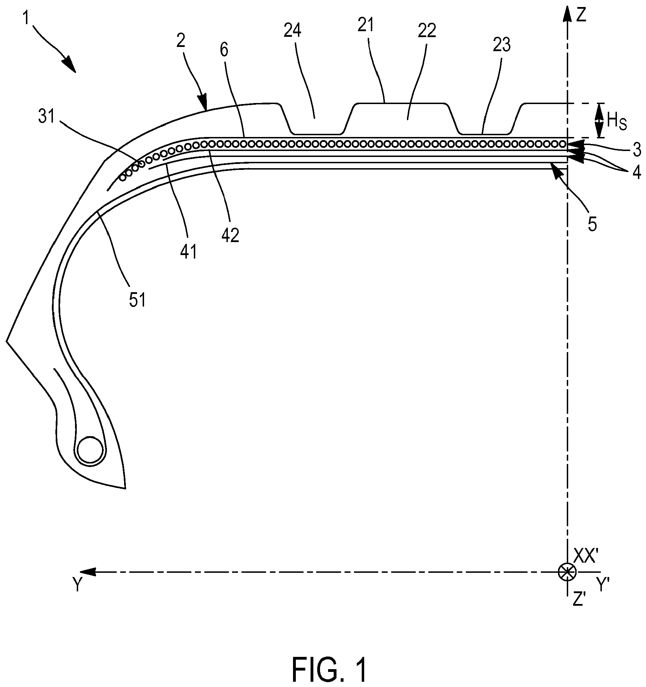

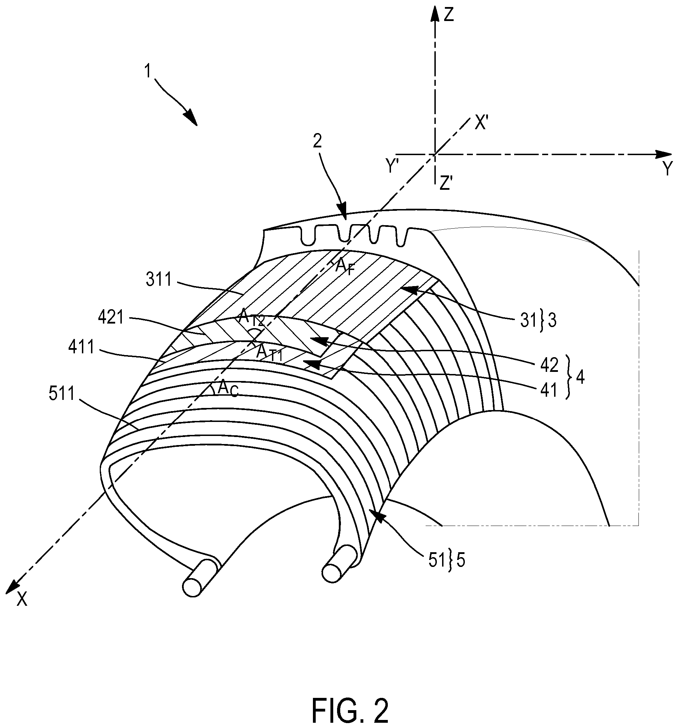

L'invention est illustrée par les figures 1 et 2, non représentées à l'échelle et décrites ci-après :
- Figure 1: demi-coupe méridienne d'un pneumatique selon l'invention.
- Figure 2: coupe en perspective d'un pneumatique selon l'invention.

La figure 1 représente une demi-coupe méridienne, dans un plan méridien YZ, d'un pneumatique 1 pour véhicule de tourisme selon l'invention. Le pneumatique 1 comprend, le plus radialement à l'extérieur, une bande de roulement 2, destinée à entrer en contact avec un sol par l'intermédiaire d'une surface de roulement 21 et comprenant des éléments en relief 22 s'étendant radialement vers l'extérieur à partir d'une surface de fond 23 jusqu'à la surface de roulement 21 sur une hauteur radiale H_{S} mesurée dans un plan équatorial XZ du pneumatique. Les éléments en relief 22 ont un volume total Vp et sont séparés par des creux 24 ayant un volume total V_{C}. La bande de roulement 2 a un taux d'entaillement volumique T_{EV}, défini comme le rapport entre le volume total V_{C} des creux 24 et la somme du volume total V_{C} des creux 24 et du volume total Vp des éléments en relief 22. La bande de roulement 2 est constituée par un mélange élastomérique ayant une température de transition vitreuse T_{g}, une dureté Shore A et une perte à 60°C. Le pneumatique 1 comprend en outre, selon un mode particulier de réalisation de l'invention, une couche intermédiaire 6 comprenant mélange élastomérique et positionnée radialement à l'intérieur de la bande de roulement 2 et radialement à l'extérieur de l'armature de frettage 3. Le pneumatique 1 comprend également une armature de frettage 3, radialement intérieure à la couche intermédiaire 6 et comprenant une couche de frettage 31, une armature de travail 4, radialement intérieure à l'armature de frettage 3 et comprenant deux couches de travail (41, 42) radialement superposées, et, enfin, une armature de carcasse 5 comprenant une couche de carcasse 51.

La figure 2 représente une coupe en perspective d'un pneumatique selon l'invention. La couche de frettage 31 comprend des renforts textiles 311 enrobés dans un mélange élastomérique, parallèles entre eux et formant, avec une direction circonférentielle XX' du pneumatique, un angle A_{F}, mesuré dans le plan équatorial XZ du pneumatique, au plus égal à 5° en valeur absolue. Les deux couches de travail (41, 42) comprennent chacune des renforts métalliques (411, 421) enrobés dans un mélange élastomérique, parallèles entre eux dans chaque couche et croisés d'une couche à la suivante, en formant, avec la direction circonférentielle XX' du pneumatique, un angle (A_{T1}, A_{T2}), mesuré dans le plan équatorial XZ du pneumatique, dont la valeur absolue est au moins égale à 20°. La couche de carcasse 51 comprend des renforts textiles 511 enrobés dans un matériau élastomérique, parallèles entre eux et formant, avec la direction circonférentielle XX' du pneumatique, un angle A_{C} au moins égal à 85° et au plus égal 95°.

Selon une première caractéristique essentielle de l'invention, la bande de roulement 2 a un taux d'entaillement volumique T_{EV} au moins égal à 20% et au plus égal à 29% et une hauteur radiale H_{S} des éléments en relief 22 au moins égale à 6.0 mm et au plus égale à 7.6 mm. Selon une deuxième caractéristique essentielle de l'invention, le mélange élastomérique constitutif de la bande de roulement 2 a une température de transition vitreuse T_{g} au moins égale à -18°C et au plus égale à -6°C, une dureté Shore A au moins égale à 60 et au plus égale à 75 et une perte à 60°C au moins égale à 24% et au plus égale à 35%. Selon une troisième caractéristique essentielle de l'invention, les renforts textiles 311 de la couche de frettage 31 de l'armature de frettage 3 comprennent un polyamide aromatique, tel que l'aramide. Selon une quatrième caractéristique essentielle de l'invention, les renforts métalliques de chacune des deux couches de travail (41, 42) de l'armature de travail 4 forment, avec la direction circonférentielle XX' du pneumatique, un angle (A_{T1}, A_{T2}), mesuré dans le plan équatorial XZ du pneumatique, dont la valeur absolue est au moins égale à 25° et au plus égale à 40°.

L'invention a été plus particulièrement étudiée pour un pneumatique de tourisme de dimension 225/40 R18. Un pneumatique de référence R a été comparé à un premier pneumatique A selon l'invention et à un second pneumatique B selon l'invention.

La bande de roulement du pneumatique de référence R comprend des éléments en relief s'étendant radialement sur une hauteur radiale H_{S} égale à 7.6 mm. Le taux d'entaillement volumique T_{EV} de la bande de roulement est égal à 31%. Le mélange élastomérique constitutif de la bande de roulement a une température de transition (vitreuse T_{g} égale à -3°C, une dureté Shore A égale à 74 et une perte à 60°C égale à 35%. Le pneumatique de référence R ne comprend pas de couche intermédiaire radialement à l'intérieur de la bande de roulement et radialement à l'extérieur de l'armature de frettage. L'armature de frettage comprend une couche de frettage dont les renforts textiles sont en nylon de titre 140/2 (assemblage de 2 surtors de 140 tex chacun, 1 tex étant la masse en g de 1000 m de fil). L'armature de travail comprend deux couches de travail radialement superposées. Les renforts métalliques de formule (2+2).26 (assemblage torsadé de deux paires de deux fils métalliques ayant chacun un diamètre égal à 0.26 mm) de la couche de travail radialement la plus intérieure et de la couche de travail radialement la plus extérieure ont une section S inscrite dans un cercle de diamètre D égale à 0.71 mm et forment, avec la direction circonférentielle XX' du pneumatique, un angle (A_{T1}, A_{T2}), mesuré dans le plan équatorial XZ du pneumatique, respectivement égal à +27° et -27°. L'épaisseur radiale moyenne E_{T} de chaque couche de travail est égale à 1.2 mm. Le pas entre deux renforts métalliques consécutifs, c'est-à-dire la distance entre leurs lignes moyennes respectives, est égal à 1.25 mm, donc la densité de renforts métalliques est égale à 1/1.25= 0.8 renfort/mm, soit 80 renforts/dm. L'armature de carcasse est constituée par une couche de carcasse dont les renforts textiles sont en polyéthylène téréphtalate (PET) de titre 220/2 (assemblage de 2 surtors de 220 tex chacun), avec une torsion de 240 tours/m et répartis dans la couche de carcasse avec une densité de 96 fils/dm.

La bande de roulement du pneumatique A selon l'invention comprend des éléments en relief s'étendant radialement sur une hauteur radiale H_{S} égale à 7.5 mm. Le taux d'entaillement volumique T_{EV} de la bande de roulement est égal à 26.5%. Le mélange élastomérique constitutif de la bande de roulement a une température de transition vitreuse T_{g} égale à -16°C, une dureté Shore A égale à 63 et une perte à 60°C égale à 26%. Le pneumatique A selon l'invention comprend en outre une couche intermédiaire, radialement à l'intérieur de la bande de roulement et radialement à l'extérieur de l'armature de frettage, constituée par un mélange élastomérique ayant une dureté Shore A égale à 66 et une perte à 60°C égale à 14%. L'armature de frettage comprend une couche de frettage dont les renforts textiles comprennent une combinaison de fils en aramide et de fils en nylon de titre A167/N140 (assemblage d'un surtors en aramide de 167 tex et d'un surtors en nylon de 140 tex). L'armature de travail comprend deux couches de travail radialement superposées. Les renforts métalliques de la couche de travail radialement la plus intérieure et de la couche de travail radialement la plus extérieure sont des monofilaments ayant une section circulaire S de diamètre D égal à 0.32 mm et forment, avec la direction circonférentielle XX' du pneumatique, un angle (A_{T1}, A_{T2}), mesuré dans le plan équatorial XZ du pneumatique, respectivement égal à +29° et -29°. L'épaisseur radiale moyenne E_{T} de chaque couche de travail est égale à 0.75 mm. Le pas entre deux monofilaments consécutifs, c'est-à-dire la distance entre leurs lignes moyennes respectives, est égal à 0.63 mm, donc la densité de monofilaments est égale à 1/0.63= 1.6 renfort/mm, soit 160 renforts/dm. L'armature de carcasse est constituée par une couche de carcasse dont les renforts textiles sont en polyéthylène téréphtalate (PET) de titre 334/2 (assemblage de 2 surtors de 334 tex chacun), avec une torsion de 270 tours/m et répartis dans la couche de carcasse avec une densité de 80 fils/dm.

La bande de roulement du pneumatique B selon l'invention comprend des éléments en relief s'étendant radialement sur une hauteur radiale H_{S} égale à 7.5 mm. Le taux d'entaillement volumique T_{EV} de la bande de roulement est égal à 26.5%. Le mélange élastomérique constitutif de la bande de roulement a une température de transition vitreuse T_{g} égale à -9°C, une dureté Shore A égale à 72 et une perte à 60°C égale à 33%. Le pneumatique B selon l'invention comprend en outre une couche intermédiaire, radialement à l'intérieur de la bande de roulement et radialement à l'extérieur de l'armature de frettage, constituée par un mélange élastomérique ayant une dureté Shore A égale à 66 et une perte à 60°C égale à 14%. L'armature de frettage comprend une couche de frettage dont les renforts textiles comprennent une combinaison de fils en aramide et de fils en nylon de titre A167/N140 (assemblage d'un surtors en aramide de 167 tex et d'un surtors en nylon de 140 tex) avec une torsion de 290 tours/m et répartis dans la couche de carcasse avec une densité de 98 fils/dm. L'armature de travail comprend deux couches de travail radialement superposées. Les renforts métalliques de la couche de travail radialement la plus intérieure et de la couche de travail radialement la plus extérieure sont des monofilaments ayant une section circulaire S de diamètre D égal à 0.32 mm et forment, avec la direction circonférentielle XX' du pneumatique, un angle (A_{T1}, A_{T2}), mesuré dans le plan équatorial XZ du pneumatique, respectivement égal à +29° et -29°. L'épaisseur radiale moyenne E_{T} de chaque couche de travail est égale à 0.75 mm.. Le pas entre deux monofilaments consécutifs, c'est-à-dire la distance entre leurs lignes moyennes respectives, est égal à 0.63 mm, donc la densité de monofilaments est égale à 1/0.63= 1.6 renfort/mm, soit 160 renforts/dm. L'armature de carcasse est constituée par une couche de carcasse dont les renforts textiles sont en polyéthylène téréphtalate (PET) de titre 334/2 (assemblage de 2 surtors de 334 tex chacun), avec une torsion de 270 tours/m et répartis dans la couche de carcasse avec une densité de 80 fils/dm.

Le poids du pneu de référence R est de 9,65 kg, le poids du pneumatique A selon l'invention est de 9,45 kg, le poids du pneumatique B selon l'invention est de 9,4 kg.

Les pneumatiques A, B et R ont été soumis à divers tests et mesures comparatifs dont les résultats en pourcentage des résultats du pneumatique de référence R (base 100) sont présentés dans le tableau 1 ci-dessous:

**Tableau 1**

| Performance | Pneumatique A | Pneumatique B |
|---|---|---|
| Adhérence longitudinale (distance de freinage) sur sol sec | 103 | 102.5 |
| Adhérence longitudinale (distance de freinage) sur sol mouillé | 103.5 | 104.5 |
| Adhérence transversale (temps pour réaliser un tour de circuit) sur sol sec | 101 | 101.5 |
| Adhérence transversale (temps pour réaliser un tour de circuit) sur sol mouillé | 96.5 | 101 |
| Rigidité latérale à faible accélération (ou rigidité de dérive) | 101 | 103 |
| Usure | 100 | 100 |
| Masse | 102 | 102.5 |

Par rapport au pneumatique R de l'état de la technique pris en référence, les pneumatiques A et B selon l'invention présentent une amélioration en adhérence longitudinale sur sol mouillé et sur sol sec, une performance équivalente en adhérence transversale sur sol mouillé et sur sol sec (avec une légère dégradation sur sol mouillé pour le pneumatique A), une amélioration du comportement résultant d'une augmentation de la rigidité latérale à faible accélération, et une performance équivalente en usure. On note également un gain en performance masse, c'est-à-dire une réduction de la masse pour les pneumatiques A et B.

## Revendications

1. Pneumatique (1) pour véhicule de tourisme comprenant :
- une bande de roulement (2), destinée à entrer en contact avec un sol par l'intermédiaire d'une surface de roulement (21) et comprenant des éléments en relief (22) s'étendant radialement vers l'extérieur à partir d'une surface de fond (23) jusqu'à la surface de roulement (21) sur une hauteur radiale H_{S} mesurée dans un plan équatorial XZ du pneumatique, les éléments en relief (22) ayant un volume total Vp et étant séparés par des creux (24) ayant un volume total V_{C}, la bande de roulement (2) ayant un taux d'entaillement volumique T_{EV}, défini comme le rapport entre le volume total V_{C} des creux (24) et la somme du volume total V_{C} des creux (24) et du volume total Vp des éléments en relief (22), la bande de roulement (2) comprenant en outre au moins un mélange élastomérique ayant une température de transition vitreuse T_{g}, déterminée selon la norme ASTM D 5992-96, une dureté Shore A et une perte à 60°C,
- une armature de frettage (3), radialement intérieure à la bande de roulement (2), comprenant au moins une couche de frettage (31) comprenant des renforts textiles (311) enrobés dans un mélange élastomérique, parallèles entre eux et formant, avec une direction circonférentielle XX' du pneumatique, un angle A_{F}, mesuré dans le plan équatorial XZ du pneumatique, au plus égal à 5° en valeur absolue les renforts textiles (311) de la au moins une couche de frettage (31) de l'armature de frettage (3) comprenant un polyamide aromatique, tel que l'aramide,
- une armature de travail (4), radialement intérieure à l'armature de frettage (3), comprenant au moins deux couches de travail (41, 42), radialement superposées, comprenant des renforts métalliques (411, 421) enrobés dans un mélange élastomérique, parallèles entre eux dans chaque couche et croisés d'une couche à la suivante, en formant, avec la direction circonférentielle XX' du pneumatique, un angle (A_{T1}, A_{T2}), mesuré dans le plan équatorial XZ du pneumatique, dont la valeur absolue est au moins égale à 25° et au plus égale à 40°,
les renforts métalliques (411, 421) de chacune des au moins deux couches de travail (41, 42) de l'armature de travail (4) étant des monofilaments en acier ayant une section S inscrite dans un cercle de diamètre D et dont la plus petite dimension Dmin est au moins égale à 0.20 mm et au plus égale à 0.5 mm,
- une armature de carcasse (5) comprenant au moins une couche de carcasse (51) comprenant des renforts textiles (511) enrobés dans un matériau élastomérique, parallèles entre eux et formant, avec la direction circonférentielle XX' du pneumatique, un angle A_{C} au moins égal à 85° et au plus égal 95°,
**caractérisé en ce que** la bande de roulement (2) a un taux d'entaillement volumique T_{EV} au moins égal à 20% et au plus égal à 29% et une hauteur radiale H_{S} des éléments en relief (22) au moins égale à 6.0 mm et au plus égale à 7.6 mm, **en ce que** le au moins un mélange élastomérique constitutif de la bande de roulement (2) a une température de transition vitreuse T_{g} au moins égale à -18°C et au plus égale à -6°C, une dureté Shore A au moins égale à 60 et au plus égale à 75 et une perte à 60°C au moins égale à 24% et au plus égale à 35%, **en ce que** les renforts métalliques (411, 421) de chacune des au moins deux couches de travail (41, 42) de l'armature de travail (4) sont répartis selon une densité d_{T} au moins égale à 100 fils/dm et au plus égale à 200 fils /dm **et en ce que** chaque couche de travail (41, 42) de l'armature de travail (4) a une épaisseur radiale moyenne E_{T} au moins égale à D+0.1 mm et au plus égale à D+0.6 mm, avec D diamètre du cercle circonscrit à la section S du renfort métallique de type monofilament.

2. Pneumatique (1) selon la revendication 1, **dans lequel** la bande de roulement (2) a une hauteur radiale H_{S} des éléments en relief (22) au moins égale à 6.5 mm.

3. Pneumatique (1) selon l'une des revendications précédentes, **dans lequel** les renforts textiles (311) de la au moins une couche de frettage (31) de l'armature de frettage (3) forment, avec la direction circonférentielle XX' du pneumatique, un angle A_{F}, mesuré dans le plan équatorial XZ du pneumatique, au plus égal à 1° en valeur absolue.

4. Pneumatique (1) selon l'une quelconque des revendications précédentes, l'armature de frettage (3) ayant une largeur axiale L_{F} et l'armature de travail (4) ayant une largeur axiale L_{T}, **dans lequel** la largeur axiale L_{F} de l'armature de frettage (3) est au moins égale à la largeur axiale L_{T} de l'armature de travail (4), de telle sorte que l'armature de frettage (3) soit entièrement recouvrante ou débordante par rapport à l'armature de travail (4).

5. Pneumatique (1) selon l'une quelconque des revendications précédentes, **dans lequel** les renforts métalliques (411, 421) de chacune des au moins deux couches de travail (41, 42) de l'armature de travail (4) forment, avec la direction circonférentielle XX' du pneumatique, un angle (A_{T1}, A_{T2}), mesuré dans le plan équatorial XZ du pneumatique, dont la valeur absolue est au moins égale à 27° et au plus égale à 33°.

6. Pneumatique (1) selon l'une quelconque des revendications précédentes, **dans lequel** les renforts métalliques (411, 421) de chacune des au moins deux couches de travail (41, 42) de l'armature de travail (4) sont des monofilaments ayant une section S dont la plus petite dimension Dmin est au moins égale à 0.30 mm et au plus égale à 0.4 mm, de préférence au moins égale à 0.32 mm et au plus égale à 0.36 mm.

7. Pneumatique (1) selon l'une quelconque des revendications précédentes, **dans lequel** les renforts métalliques (411, 421) de chacune des au moins deux couches de travail (41, 42) de l'armature de travail (4) sont des monofilaments en acier dont la résistance à la rupture en traction Rm est au moins égale à 3000 MPa, de préférence au moins égale à 3500 MPa.

8. Pneumatique (1) selon l'une quelconque des revendications précédentes, **dans lequel** les renforts métalliques (411, 421) de chacune des au moins deux couches de travail (41, 42) de l'armature de travail (4) sont répartis selon une densité d_{T} au moins égale à 120 fils/dm et au plus égale à 180 fils /dm.

9. Pneumatique (1) selon l'une quelconque des revendications précédentes, **dans lequel** chaque couche de travail (41, 42) de l'armature de travail (4) a une épaisseur radiale moyenne E_{T} au moins égale à D+0.3 mm et au plus égale à D+0.5 mm, avec D diamètre du cercle circonscrit à la section S du renfort métallique de type monofilament.

10. Pneumatique (1) selon l'une quelconque des revendications précédentes, **dans lequel** une couche intermédiaire (6) comprenant au moins un mélange élastomérique est positionnée radialement à l'intérieur de la bande de roulement (2) et radialement à l'extérieur de l'armature de frettage (3).

11. Pneumatique (1) selon la revendication précédente, **dans lequel** la couche intermédiaire (6) a une épaisseur radiale E au moins égale à 0.3 mm et au plus égale à 4.0 mm.

12. Pneumatique (1) selon l'une quelconque des revendications 10 ou 11, le au moins un mélange élastomérique, constitutif de la couche intermédiaire (6) ayant une dureté Shore A et une perte à 60°C, **dans lequel** le au moins un mélange élastomérique, constitutif de la couche intermédiaire (6), a une dureté Shore A au moins égale à 63 et au plus égale à 69 et une perte à 60°C au moins égale à 10% et au plus égale à 16%.

13. Pneumatique (1) selon l'une quelconque des revendications 10 à 12, **dans lequel** la couche intermédiaire (6) est dissymétrique par rapport au plan équatorial XZ du pneumatique, de telle sorte que la surface S₁ de la section méridienne de la portion (61) de couche intermédiaire (6), axialement positionnée dans la moitié de pneumatique destinée à être montée du côté intérieur du véhicule, est au moins égale à 1,05 fois et au plus égale à 1,15 fois la surface S₂ de la section méridienne de la portion (62) de couche intermédiaire (6), axialement positionnée dans la moitié de pneumatique destinée à être montée du côté extérieur du véhicule.

14. Pneumatique (1) selon l'une quelconque des revendications précédentes, **dans lequel** l'agencement des éléments en relief (22) de la bande de roulement (2) est dissymétrique par rapport au plan équatorial XZ du pneumatique, de telle sorte que le taux d'entaillement volumique T_{EV1} de la moitié de bande roulement destinée à être montée du côté intérieur du véhicule est au moins égal à 1.3 fois et au plus égal à 2 fois le taux d'entaillement volumique T_{EV2} de la moitié de bande roulement destinée à être montée du côté extérieur du véhicule.

15. Pneumatique (1) selon l'une quelconque des revendications précédentes, les éléments en relief (22) de la bande de roulement (2) comprenant chacun une face radialement extérieure, positionnée sur la surface de roulement (21), appelée face de contact (221), **dans lequel** la face de contact (221) de tout élément en relief (22) de la bande de roulement (2) comprend au moins un chanfrein ayant une hauteur radiale H_{CH} au moins égale à 1 mm et au plus égale à 2 mm et formant, avec la surface de roulement (21), un angle A_{CH} au moins égale à 45°.

## Patentansprüche

1. Reifen (1) für einen Personenkraftwagen, umfassend:
- einen Laufstreifen (2), der dazu bestimmt ist, über eine Lauffläche (21) mit einem Boden in Kontakt zu kommen, und Profilelemente (22) umfasst, die sich von einer Bodenfläche (23) aus bis zu der Lauffläche (21) über eine in einer Äquatorialebene XZ des Reifens gemessene radiale Höhe H_{S} radial nach außen erstrecken, wobei die Profilelemente (22) ein Gesamtvolumen V_{P} aufweisen und durch Vertiefungen (24) getrennt sind, die ein Gesamtvolumen V_{C} aufweisen, wobei der Laufstreifen (2) einen volumenbezogenen Negativprofilanteil T_{EV} aufweist, der als das Verhältnis zwischen dem Gesamtvolumen V_{C} der Vertiefungen (24) und der Summe des Gesamtvolumens V_{C} der Vertiefungen (24) und des Gesamtvolumens V_{P} der Profilelemente (22) definiert ist, wobei der Laufstreifen (2) außerdem wenigstens eine Elastomermischung umfasst, die eine gemäß der Norm ASTM D 5992-96 bestimmte Glasübergangstemperatur T_{g}, eine Shore-Härte A und einen Schwund bei 60 °C aufweist,
- eine Versteifungsbewehrung (3) radial innerhalb des Laufstreifens (2), die wenigstens eine Versteifungsschicht (31) umfasst, die in eine Elastomermischung eingebettete textile Festigkeitsträger (311) umfasst, die zueinander parallel sind und mit einer Umfangsrichtung XX' des Reifens einen in der Äquatorialebene XZ des Reifens gemessenen Winkel A_{F} bilden, dessen absoluter Betrag höchstens gleich 5° ist, wobei die textilen Festigkeitsträger (311) der wenigstens einen Versteifungsschicht (31) der Versteifungsbewehrung (3) ein aromatisches Polyamid umfassen, wie etwa Aramid,
- eine Arbeitsbewehrung (4) radial innerhalb der Versteifungsbewehrung (3), die wenigstens zwei radial übereinander angeordnete Arbeitsschichten (41, 42) umfasst, die in eine Elastomermischung eingebettete metallische Festigkeitsträger (411, 421) umfassen, die in jeder Schicht zueinander parallel sind und sich von einer Schicht zur anderen überkreuzen, wobei sie mit der Umfangsrichtung XX' des Reifens einen in der Äquatorialebene XZ des Reifens gemessenen Winkel (A_{T1}, A_{T2}) bilden, dessen absoluter Betrag mindestens gleich 25° und höchstens gleich 40° ist, wobei die metallischen Festigkeitsträger (411, 421) jeder der wenigstens zwei Arbeitsschichten (41, 42) der Arbeitsbewehrung (4) Monofilamente aus Stahl sind, die einen Querschnitt S aufweisen, der in einen Kreis mit dem Durchmesser D einbeschrieben ist und dessen kleinste Abmessung Dmin mindestens gleich 0,20 mm und höchstens gleich 0,5 mm ist,
- eine Karkassenbewehrung (5), die wenigstens eine Karkassenschicht (51) umfasst, die in ein Elastomermaterial eingebettete textile Festigkeitsträger (511) umfasst, die zueinander parallel sind und mit der Umfangsrichtung XX' des Reifens einen Winkel A_{C} bilden, der mindestens gleich 85° und höchstens gleich 95° ist,
**dadurch gekennzeichnet, dass** der Laufstreifen (2) einen volumenbezogenen Negativprofilanteil T_{EV}, der mindestens gleich 20 % und höchstens gleich 29 % ist, und eine radiale Höhe H_{S} der Profilelemente (22), die mindestens gleich 6,0 mm und höchstens gleich 7,6 mm ist, aufweist, dadurch, dass die wenigstens eine Elastomermischung, die Bestandteil des Laufstreifens (2) ist, eine Glasübergangstemperatur T_{g}, die mindestens gleich -18 °C und höchstens gleich -6 °C ist, eine Shore-Härte A, die mindestens gleich 60 und höchstens gleich 75 ist, und einen Schwund bei 60 °C, der mindestens gleich 24 % und höchstens gleich 35 % ist, aufweist,
dadurch, dass die metallischen Festigkeitsträger (411, 421) jeder der wenigstens zwei Arbeitsschichten (41, 42) der Arbeitsbewehrung (4) mit einer Dichte d_{T} verteilt sind, die mindestens gleich 100 Drähte/dm und höchstens gleich 200 Drähte/dm ist, und dadurch, dass jede Arbeitsschicht (41, 42) der Arbeitsbewehrung (4) eine mittlere radiale Dicke E_{T} aufweist, die mindestens gleich D+0,1 mm und höchstens gleich D+0,6 mm ist, wobei D der Durchmesser des dem Querschnitt S des metallischen Festigkeitsträgers vom Typ eines Monofilaments umbeschriebenen Kreises ist.

2. Reifen (1) nach Anspruch 1, wobei der Laufstreifen (2) eine radiale Höhe H_{S} der Profilelemente (22) aufweist, die mindestens gleich 6,5 mm ist.

3. Reifen (1) nach einem der vorhergehenden Ansprüche, wobei die textilen Festigkeitsträger (311) der wenigstens einen Versteifungsschicht (31) der Versteifungsbewehrung (3) mit der Umfangsrichtung XX' des Reifens einen in der Äquatorialebene XZ des Reifens gemessenen Winkel A_{F} bilden, dessen absoluter Betrag höchstens gleich 1° ist.

4. Reifen (1) nach einem der vorhergehenden Ansprüche, wobei, wenn die Versteifungsbewehrung (3) eine axiale Breite L_{F} aufweist und die Arbeitsbewehrung (4) eine axiale Breite L_{T} aufweist, die axiale Breite L_{F} der Versteifungsbewehrung (3) mindestens gleich der axialen Breite L_{T} der Arbeitsbewehrung (4) ist, derart, dass die Versteifungsbewehrung (3) die Arbeitsbewehrung (4) vollständig bedeckt oder über diese hinausreicht.

5. Reifen (1) nach einem der vorhergehenden Ansprüche, wobei die metallischen Festigkeitsträger (411, 421) jeder der wenigstens zwei Arbeitsschichten (41, 42) der Arbeitsbewehrung (4) mit der Umfangsrichtung XX' des Reifens einen in der Äquatorialebene XZ des Reifens gemessenen Winkel (A_{T1}, A_{T2}) bilden, dessen absoluter Betrag mindestens gleich 27° und höchstens gleich 33° ist.

6. Reifen (1) nach einem der vorhergehenden Ansprüche, wobei die metallischen Festigkeitsträger (411, 421) jeder der wenigstens zwei Arbeitsschichten (41, 42) der Arbeitsbewehrung (4) Monofilamente sind, die einen Querschnitt S aufweisen, dessen kleinste Abmessung Dmin mindestens gleich 0,30 mm und höchstens gleich 0,4 mm ist, vorzugsweise mindestens gleich 0,32 mm und höchstens gleich 0,36 mm.

7. Reifen (1) nach einem der vorhergehenden Ansprüche, wobei die metallischen Festigkeitsträger (411, 421) jeder der wenigstens zwei Arbeitsschichten (41, 42) der Arbeitsbewehrung (4) Monofilamente aus Stahl sind, deren Zugfestigkeit Rm mindestens gleich 3000 MPa ist, vorzugsweise mindestens gleich 3500 MPa.

8. Reifen (1) nach einem der vorhergehenden Ansprüche, wobei die metallischen Festigkeitsträger (411, 421) jeder der wenigstens zwei Arbeitsschichten (41, 42) der Arbeitsbewehrung (4) mit einer Dichte d_{T} verteilt sind, die mindestens gleich 120 Drähte/dm und höchstens gleich 180 Drähte/dm ist.

9. Reifen (1) nach einem der vorhergehenden Ansprüche, wobei jede Arbeitsschicht (41, 42) der Arbeitsbewehrung (4) eine mittlere radiale Dicke E_{T} aufweist, die mindestens gleich D+0,3 mm und höchstens gleich D+0,5 mm ist, wobei D der Durchmesser des dem Querschnitt S des metallischen Festigkeitsträgers vom Typ eines Monofilaments umbeschriebenen Kreises ist.

10. Reifen (1) nach einem der vorhergehenden Ansprüche, wobei eine Zwischenschicht (6), die wenigstens eine Elastomermischung umfasst, radial innerhalb des Laufstreifens (2) und radial außerhalb der Versteifungsbewehrung (3) positioniert ist.

11. Reifen (1) nach dem vorhergehenden Anspruch, wobei die Zwischenschicht (6) eine radiale Dicke E aufweist, die mindestens gleich 0,3 mm und höchstens gleich 4,0 mm ist.

12. Reifen (1) nach einem der Ansprüche 10 oder 11, wobei, wenn die wenigstens eine Elastomermischung, die Bestandteil der Zwischenschicht (6) ist, eine Shore-Härte A und einen Schwund bei 60 °C aufweist, die wenigstens eine Elastomermischung, die Bestandteil der Zwischenschicht (6) ist, eine Shore-Härte A, die mindestens gleich 63 und höchstens gleich 69 ist, und einen Schwund bei 60 °C, der mindestens gleich 10 % und höchstens gleich 16 % ist, aufweist.

13. Reifen (1) nach einem der Ansprüche 10 bis 12, wobei die Zwischenschicht (6) asymmetrisch in Bezug auf die Äquatorialebene XZ des Reifens ist, derart, dass die Fläche S₁ des Meridianschnittes des Abschnitts (61) der Zwischenschicht (6), der axial in der Reifenhälfte positioniert ist, die dazu bestimmt ist, auf der Innenseite des Fahrzeugs angebracht zu werden, mindestens gleich dem 1,05-Fachen und höchstens gleich dem 1,15-Fachen der Fläche S₂ des Meridianschnittes des Abschnitts (62) der Zwischenschicht (6) ist, der axial in der Reifenhälfte positioniert ist, die dazu bestimmt ist, auf der Außenseite des Fahrzeugs angebracht zu werden.

14. Reifen (1) nach einem der vorhergehenden Ansprüche, wobei die Anordnung der Profilelemente (22) des Laufstreifens (2) asymmetrisch in Bezug auf die Äquatorialebene XZ des Reifens ist, derart, dass der volumenbezogene Negativprofilanteil T_{EV1} der Laufstreifenhälfte, die dazu bestimmt ist, auf der Innenseite des Fahrzeugs angebracht zu werden, mindestens gleich dem 1,3-Fachen und höchstens gleich dem 2-Fachen des volumenbezogenen Negativprofilanteils T_{EV2} der Laufstreifenhälfte ist, die dazu bestimmt ist, auf der Außenseite des Fahrzeugs angebracht zu werden.

15. Reifen (1) nach einem der vorhergehenden Ansprüche, wobei, wenn die Profilelemente (22) des Laufstreifens (2) jeweils eine radial äußere Fläche umfassen, die auf der Lauffläche (21) positioniert ist, Kontaktfläche (221) genannt, die Kontaktfläche (221) jedes Profilelements (22) des Laufstreifens (2) wenigstens eine Abschrägung umfasst, die eine radiale Höhe H_{CH} aufweist, die mindestens gleich 1 mm und höchstens gleich 2 mm ist, und die mit der Lauffläche (21) einen Winkel A_{CH} bildet, der mindestens gleich 45° ist.

## Claims

1. Tyre (1) for a passenger vehicle, comprising:
- a tread (2) that is intended to come into contact with the ground via a tread surface (21) and comprises raised elements (22) extending radially outwards from a bottom surface (23) to the tread surface (21) over a radial height H_{S}, measured in an equatorial plane XZ of the tyre, the raised elements (22) having a total volume V_{P} and being separated by voids (24) having a total volume V_{C}, the tread (2) having a volumetric void ratio T_{EV}, defined as being the ratio between the total volume V_{C} of the voids (24) and the sum of the total volume V_{C} of the voids (24) and the total volume V_{P} of the raised elements (22), the tread (2) also comprising at least one elastomeric compound having a glass transition temperature T_{g}, determined according to the standard ASTM D 5992-96, a Shore A hardness and a loss at 60°C,
- a hoop reinforcement (3), radially on the inside of the tread (2), comprising at least one hooping layer (31) comprising textile reinforcers (311) that are coated in an elastomeric compound, are mutually parallel and form, with a circumferential direction XX' of the tyre, an angle A_{F}, measured in the equatorial plane XZ of the tyre, at most equal to 5° in terms of absolute value, the textile reinforcers (311) of the at least one hooping layer (31) of the hoop reinforcement (3) comprising an aromatic polyamide, such as aramid,
- a working reinforcement (4), radially on the inside of the hoop reinforcement (3), comprising at least two, radially superposed working layers (41, 42) comprising metal reinforcers (411, 421) that are coated in an elastomeric compound, are mutually parallel in each layer and are crossed from one layer to the next, forming, with the circumferential direction XX' of the tyre, an angle (A_{T1}, A_{T2}), measured in the equatorial plane XZ of the tyre, with an absolute value at least equal to 25° and at most equal to 40°, the metal reinforcers (411, 421) of each of the at least two working layers (41, 42) of the working reinforcement (4) being steel monofilaments having a cross section S inscribed in a circle of diameter D, the smallest dimension Dmin of which is at least equal to 0.20 mm and at most equal to 0.5 mm,
- a carcass reinforcement (5) comprising at least one carcass layer (51) comprising textile reinforcers (511) that are coated in an elastomeric material, are mutually parallel and form, with the circumferential direction XX' of the tyre, an angle A_{C} at least equal to 85° and at most equal to 95°,
**characterized in that** the tread (2) has a volumetric void ratio T_{EV} at least equal to 20% and at most equal to 29% and a radial height H_{S} of the raised elements (22) at least equal to 6.0 mm and at most equal to 7.6 mm, **in that** the at least one elastomeric compound that makes up the tread (2) has a glass transition temperature T_{g} at least equal to -18°C and at most equal to -6°C, a Shore A hardness at least equal to 60 and at most equal to 75, and a loss at 60°C at least equal to 24% and at most equal to 35%, **in that** the metal reinforcers (411, 421) of each of the at least two working layers (41, 42) of the working reinforcement (4) are distributed at a density d_{T} at least equal to 100 threads/dm and at most equal to 200 threads/dm, **and in that** each working layer (41, 42) of the working reinforcement (4) has a mean radial thickness E_{T} at least equal to D+0.1 mm and at most equal to D+0.6 mm, where D is the diameter of the circle circumscribed on the cross section S of the monofilament-type metal reinforcer.

2. Tyre (1) according to Claim 1, **wherein** the tread (2) has a radial height H_{S} of the raised elements (22) at least equal to 6.5 mm.

3. Tyre (1) according to either of the preceding claims, **wherein** the textile reinforcers (311) of the at least one hooping layer (31) of the hoop reinforcement (3) form, with the circumferential direction XX' of the tyre, an angle A_{F}, measured in the equatorial plane XZ of the tyre, at most equal to 1° in terms of absolute value.

4. Tyre (1) according to any one of the preceding claims, the hoop reinforcement (3) having an axial width L_{F} and the working reinforcement (4) having an axial width L_{T}, **wherein** the axial width L_{F} of the hoop reinforcement (3) is at least equal to the axial width L_{T} of the working reinforcement (4), such that the hoop reinforcement (3) entirely covers or protrudes beyond the working reinforcement (4).

5. Tyre (1) according to any one of the preceding claims, **wherein** the metal reinforcers (411, 421) of each of the at least two working layers (41, 42) of the working reinforcement (4) form, with the circumferential direction XX' of the tyre, an angle (A_{T1}, A_{T2}), measured in the equatorial plane XZ of the tyre, with an absolute value at least equal to 27° and at most equal to 33°.

6. Tyre (1) according to any one of the preceding claims, **wherein** the metal reinforcers (411, 421) of each of the at least two working layers (41, 42) of the working reinforcement (4) are monofilaments having a cross section S, the smallest dimension Dmin of which is at least equal to 0.30 mm and at most equal to 0.4 mm, preferably at least equal to 0.32 mm and at most equal to 0.36 mm.

7. Tyre (1) according to any one of the preceding claims, **wherein** the metal reinforcers (411, 421) of each of the at least two working layers (41, 42) of the working reinforcement (4) are steel monofilaments, the ultimate tensile strength Rm of which is at least equal to 3000 MPa, preferably at least equal to 3500 MPa.

8. Tyre (1) according to any one of the preceding claims, **wherein** the metal reinforcers (411, 421) of each of the at least two working layers (41, 42) of the working reinforcement (4) are distributed at a density d_{T} at least equal to 120 threads/dm and at most equal to 180 threads/dm.

9. Tyre (1) according to any one of the preceding claims, **wherein** each working layer (41, 42) of the working reinforcement (4) has a mean radial thickness E_{T} at least equal to D+0.3 mm and at most equal to D+0.5 mm, where D is the diameter of the circle circumscribed on the cross section S of the monofilament-type metal reinforcer.

10. Tyre (1) according to any one of the preceding claims, **wherein** an intermediate layer (6) comprising at least one elastomeric compound is positioned radially on the inside of the tread (2) and radially on the outside of the hoop reinforcement (3).

11. Tyre (1) according to the preceding claim, **wherein** the intermediate layer (6) has a radial thickness E at least equal to 0.3 mm and at most equal to 4.0 mm.

12. Tyre (1) according to either of Claims 10 and 11, the at least one elastomeric compound that makes up the intermediate layer (6) having a Shore A hardness and a loss at 60°C, **wherein** the at least one elastomeric compound that makes up the intermediate layer (6) has a Shore A hardness at least equal to 63 and at most equal to 69 and a loss at 60°C at least equal to 10% and at most equal to 16%.

13. Tyre (1) according to any one of Claims 10 to 12, **wherein** the intermediate layer (6) is asymmetric with respect to the equatorial plane XZ of the tyre, such that the surface area S₁ of the meridian section of that portion (61) of intermediate layer (6) that is positioned axially in the tyre half intended to be mounted on the inboard side of the vehicle is at least equal to 1.05 times and at most equal to 1.15 times the surface area S₂ of the meridian section of that portion (62) of intermediate layer (6) that is positioned axially in the tyre half intended to be mounted on the outboard side of the vehicle.

14. Tyre (1) according to any one of the preceding claims, **wherein** the arrangement of the raised elements (22) of the tread (2) is asymmetric with respect to the equatorial plane XZ of the tyre, such that the volumetric void ratio T_{EV1} of the tread half intended to be mounted on the inboard side of the vehicle is at least equal to 1.3 times and at most equal to 2 times the volumetric void ratio T_{EV2} of the tread half intended to be mounted on the outboard side of the vehicle.

15. Tyre (1) according to any one of the preceding claims, the raised elements (22) of the tread (2) each having a radially outer face, positioned on the tread (21), known as the contact face (221), **wherein** the contact face (221) of any raised element (22) of the tread (2) comprises at least one chamfer that has a radial height H_{CH} at least equal to 1 mm and at most equal to 2 mm and forms, with the tread surface (21), an angle A_{CH} at least equal to 45°.
